# EUROPEAN PATENT APPLICATION

(11) **EP 4 502 987 A1**
(43) Date of publication of application: **05.02.2025**
(21) Application number: 23189298.5
(22) Date of filing: 02.08.2023
(51) Int. Cl.: G09B 5/06, G09B 5/12, G09B 7/04, G09B 19/06, G09B 19/04, G09B 19/00

(54) **IMMERSIVE VIRTUAL REALITY LANGUAGE AI-POWERED LEARNING METHOD AND APPLICATION**

(71) Applicant: Le Mura, Maria Grazia, 34080 Montpellier Hérault (FR)
(72) Inventor: Le Mura, Maria Grazia, 34080 Montpellier Hérault (FR)

(57) **Abstract**

An immersive language learning method and software application leveraging Virtual Reality (VR), Artificial Intelligence (Al), and voice recognition technology. The application presents an array of VR scenarios that depict real-world environments in 360-degree videos. Users interact with an embedded questionnaire within each scenario, providing verbal responses that are captured and analyzed in real-time by the voice recognition software. The application includes a feature for users to interact with tagged objects within the VR scenarios, enhancing vocabulary learning. An integrated Al system identifies common user mistakes and generates personalized learning suggestions, offering a tailored learning experience. The application includes distinct user interfaces for administrators, teachers, and students, each having its specific functionalities. While primarily designed for language learning, the method and application can be applied to other subject areas.

## Description

### Field of Invention.

The present invention relates to language learning methods and software. More particularly, it relates to an immersive and interactive method for language learning that leverages Virtual Reality (VR) technology, Artificial Intelligence (Al), and voice recognition features integrated within a dedicated software application.

### Background

Language learning has conventionally been restricted to classroom-based instruction, textbooks, and, more recently, e-learning solutions. Traditional classroom settings, while effective to a degree, often fail to provide learners with real-life language usage scenarios or sufficient interactive experiences.

With the rise of digital learning, various software applications have been developed to enable language learning outside the classroom. These applications often utilize gamified learning experiences or interactive quizzes to enhance engagement. However, they are typically limited by two-dimensional interfaces and non-contextual interactions, which hampers the development of language fluency in real-world contexts.

E-learning platforms often leverage technologies such as Unity to create quasi-video game experiences for learners. While such platforms can deliver engaging content, they usually fail to provide a realistic, context-rich environment where learners can practice conversational skills and achieve immersive language learning.

Furthermore, most e-learning solutions for language learning provide a one-size-fits-all approach, with the same content and learning path for all users. These platforms often lack personalized feedback or adaptive learning methods, which are known to greatly enhance the learning process.

Considering the limitations of conventional and digital language learning methods, there is a pressing need for a more immersive and interactive language learning solution. An ideal system would place learners in realistic, contextually appropriate scenarios where they can practice and refine their language skills as if they were in a real-world environment.

The integration of VR technology into language learning represents an exciting possibility to provide such an immersive experience. However, the use of VR for language learning has been largely unexplored, and existing applications tend to focus more on the novelty of VR rather than on effective learning methods.

Moreover, there is a need for intelligent, adaptive learning methods that can personalize content and feedback for individual learners, based on their strengths and weaknesses. Al technology offers an excellent opportunity to implement such a feature.

It is within this context that the present invention is provided.

### Summary

The present invention pertains to an innovative method and software application for language learning. The invention utilizes Virtual Reality (VR) technology, Artificial Intelligence (Al), and voice recognition, integrated within an application to deliver an immersive, interactive, and personalized language learning experience.

In one embodiment of the invention, an immersive language learning application is provided that contains thousands of pre-recorded 360-degree video scenarios. These scenarios, recorded in real-world environments, depict various contexts in different languages, thus allowing learners to engage with realistic scenarios and practice their language skills.

An integral part of the invention is an interactive questionnaire embedded within these VR scenarios. This feature prompts users to respond verbally to context-related questions, with the progression of the scenario contingent on their responses. Voice recognition software is utilized to capture and analyze these responses in real-time.

The invention also includes a unique feature for element interaction, where users can interact with tagged objects within the VR scenario. Users can click on these objects to learn related vocabulary, providing an additional layer of engagement and context to the language learning process.

To cater to individual learning needs and styles, the invention integrates AI for personalized learning. The AI system is programmed to identify common mistakes made by learners and generate personalized suggestions based on these mistakes. This feature significantly enhances the learning process by providing targeted feedback and learning content.

Another embodiment of the invention includes distinct user interfaces for administrators, teachers, and students, each with its associated functionalities. For example, the teacher interface allows the tracking and evaluation of student progress.

While the primary application of the invention is language learning, its structure and method are broadly applicable to other subject areas, such as computer science, math, and geography.

The invention provides a novel approach to language learning that is contextually rich, engaging, and personalized. It addresses the limitations of traditional language learning methods and existing e-learning solutions, delivering a more effective language learning experience that replicates real-world interaction and offers tailored learning paths.

### Brief Description of the Drawings

Various embodiments of the invention are disclosed in the following detailed description and accompanying drawings.
FIG. 1 is a User Interaction Flow Diagram for the language learning application, showing the sequence of a student user's interactions
FIG. 2 is an Application Implementation Flow Diagram for the language learning application.

Common reference numerals are used throughout the figures and the detailed description to indicate like elements. One skilled in the art will readily recognize that the above figures are examples and that other architectures, modes of operation, orders of operation, and elements/functions can be provided and implemented without departing from the characteristics and features of the invention, as set forth in the claims.

### Detailed Description and Preferred Embodiment

The following is a detailed description of exemplary embodiments to illustrate the principles of the invention. The embodiments are provided to illustrate aspects of the invention, but the invention is not limited to any embodiment. The scope of the invention encompasses numerous alternatives, modifications and equivalent; it is limited only by the claims.

Numerous specific details are set forth in the following description in order to provide a thorough understanding of the invention. However, the invention may be practiced according to the claims without some or all of these specific details. For the purpose of clarity, technical material that is known in the technical fields related to the invention has not been described in detail so that the invention is not unnecessarily obscured.

### DEFINITIONS:

The terminology used herein is for the purpose of describing particular embodiments only and is not intended to be limiting of the invention.

As used herein, the term "and/or" includes any combinations of one or more of the associated listed items.

As used herein, the singular forms "a," "an," and "the" are intended to include the plural forms as well as the singular forms, unless the context clearly indicates otherwise.

It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof.

The terminology used herein is for the purpose of describing particular embodiments only and is not intended to be limiting.

The terms "first," "second," and the like are used herein to describe various features or elements, but these features or elements should not be limited by these terms. These terms are only used to distinguish one feature or element from another feature or element. Thus, a first feature or element discussed below could be termed a second feature or element, and similarly, a second feature or element discussed below could be termed a first feature or element without departing from the teachings of the present disclosure.

### INVENTION FEATURES

The present invention pertains to a language learning application leveraging immersive virtual reality (VR) technology to facilitate effective language acquisition in a novel and engaging manner. The application involves a language learning method wherein users, primarily students, interact with pre-recorded 360-degree videos simulating real-life scenarios. The videos adapt in response to user answers, presenting a dynamic and responsive learning environment.

Unlike traditional language learning applications, this method provides an immersive environment to learn through interaction rather than a quasi-video game experience. The immersive VR environment is designed to offer a more authentic language learning experience where students are made to feel as if they are physically present in a foreign location, thereby facilitating better memory retention and understanding. The application offers an interactive questionnaire embedded within the VR environment. As students navigate the 360-degree video, they are prompted with questions and wait for their verbal response. The application uses voice recognition software to evaluate their answers and determines the next course of action based on the correctness of the response.

The application is equipped with three separate dashboards for administrators, teachers, and students, each offering functionalities specific to the user type. The student dashboard is designed to facilitate learning activities, while the teacher dashboard enables the tracking of student progress. The admin dashboard handles higher-level controls and access to the application.

Scenario Development and Interaction: Scenarios are developed by shooting scenes in actual environments. There are currently 3000 distinct scenarios in the application's catalog, each offering unique context and interaction for users. These scenarios cover seven different languages and come in three levels of difficulty. A student's interaction with a scenario involves responding to prompts via floating text boxes. They can also interact with elements within the scenario-for example, clicking on an object within the scene to store related vocabulary. This interaction further reinforces the real-life application of language and aids in better retention.

As part of the language learning process, the application evaluates a student's progress based on their responses during the scenario. The system then offers instant feedback to the student, reinforcing their learning and helping them understand their mistakes. The application incorporates an AI system that identifies common mistakes made by students. This system provides personalized suggestions to each student, tailoring the learning path to their specific needs and enhancing the efficacy of their language learning journey.

While the primary application of the invention is language learning, the underlying method and software structure could be applied to other subjects like computer science, math, and geography, rendering this invention's potential use far-reaching.

### SMART ALGORITHMS

The invention, as described, employs artificial intelligence (Al) algorithms in several capacities, notably for voice recognition, natural language processing, and personalized learning.

Voice Recognition: The application requires a voice recognition system to interpret the user's spoken responses to prompts within the VR scenarios. Here, automatic speech recognition (ASR) algorithms can be employed. ASR algorithms, such as Hidden Markov Models (HMMs), Deep Neural Networks (DNNs), or more recent Transformer models, can convert spoken language into written text.

Natural Language Processing (NLP): After the spoken responses are transcribed, NLP algorithms can be used to understand and evaluate the correctness of the responses. Techniques like Named Entity Recognition (NER), Part-of-Speech (POS) tagging, and Dependency Parsing could be useful in this context. Furthermore, language models like BERT, GPT, or more recent Transformer-based models can provide more advanced language understanding capabilities.

Personalized Learning: For tailoring the learning experience to individual learners, Machine Learning (ML) algorithms can analyze user behavior, identify patterns and common mistakes, and offer personalized suggestions. This process often involves clustering algorithms (like K-Means, Hierarchical clustering) to segment learners into different groups based on their learning patterns, and regression or classification algorithms (like Linear Regression, SVM, Decision Trees, or Neural Networks) to predict future learning behavior and make recommendations. Reinforcement Learning algorithms, which optimize decision-making based on reward feedback, could also be valuable here, adjusting the difficulty level and type of content based on the learner's performance.

Deep Learning: More complex interactions, such as recognizing and understanding the context of spoken language or generating human-like responses, could be facilitated using Deep Learning algorithms. These algorithms, which often involve Convolutional Neural Networks (CNNs) for image processing (if object recognition in VR is needed), Recurrent Neural Networks (RNNs) for sequence prediction (useful in speech recognition), and Transformer models for complex language tasks, can offer a more nuanced and interactive learning experience.

### DESCRIPTION OF DRAWINGS

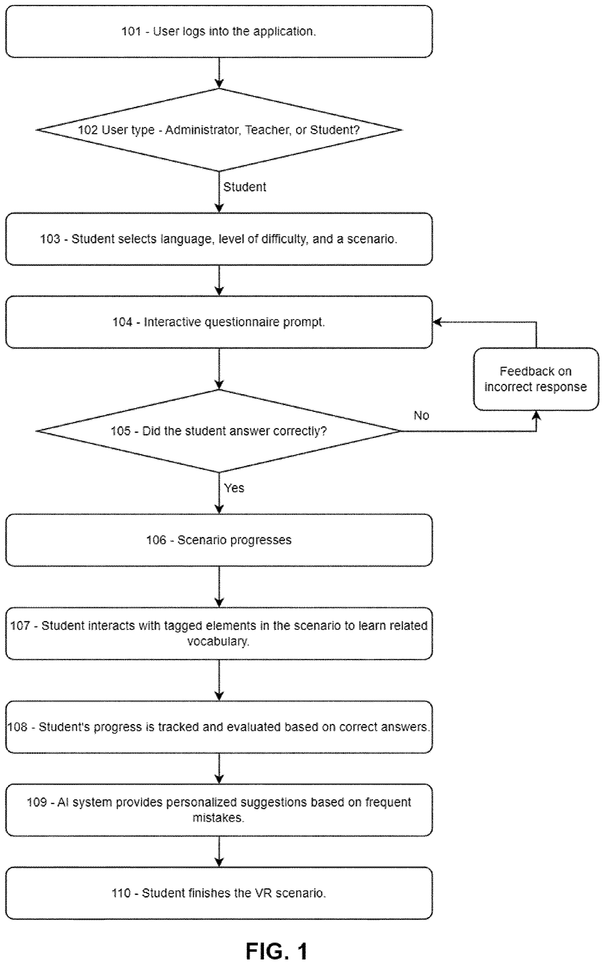

Referring to FIG.1, a User Interaction Flow Diagram for the inventive language learning application is provided. A student user's interaction is explained, starting with the login process, moving through language learning exercises, and ending with personalized feedback. The individual steps are indicated by reference numerals for clarity.

Step 1: User Login (101) - The interaction begins when a user logs into the language learning application. The login interface prompts the user for credentials, and upon successful authentication, the system determines the user type (102). There are three types of users: administrators, teachers, and students.

Step 2: User Type Determination (102) - For the purpose of this flow diagram, the focus is on the student user. The system directs the student to a dashboard specifically designed for them, which contains numerous features to facilitate language learning.

Step 3: Language and Scenario Selection (103) - The student selects their desired language and difficulty level from the options provided by the application. They then choose from one of the many pre-recorded VR scenarios, each one offering a unique context for language practice.

Step 4: VR Scenario Interaction (104) - Upon scenario selection, the student is immersed in a 360-degree video that simulates a real-life environment. They are prompted by an interactive questionnaire embedded within the VR scenario to respond verbally to context-based questions.

Step 5: Response Evaluation (105) - The system uses voice recognition software to capture and analyze the student's verbal responses. A decision is made based on whether the student's answer is correct.

Step 6: Scenario Progression or Feedback (106) - If the student's answer is correct, the scenario progresses, offering further questions and interactions. If the student's response is incorrect, the system provides instant feedback to help the student understand their mistake, and the same question is repeated to reinforce learning.

Step 7: Interactive Learning (107) - The student can interact with various elements within the VR scenario. They can click on tagged objects within the environment to learn and store related vocabulary, enhancing their contextual understanding.

Step 8: Progress Tracking (108) - The application continually tracks and evaluates the student's progress based on their correct answers, providing a comprehensive overview of their language proficiency and areas that need improvement.

Step 9: Personalized Learning (109) - The system's AI component identifies patterns in the student's common mistakes and generates personalized suggestions. These could be in the form of video explanations for verb conjugation or vocabulary revision. The goal is to offer a tailored learning path to each student, enhancing their language learning efficacy.

Step 10: Scenario Conclusion (110) - Once the student has progressed through all the interactions in a scenario, it concludes, and the student can choose to either revisit the same scenario for reinforcement or select a new one for continued learning. At this point, the system may also provide a summary of the student's performance in the scenario, including a detailed breakdown of areas of success and those that need further practice.

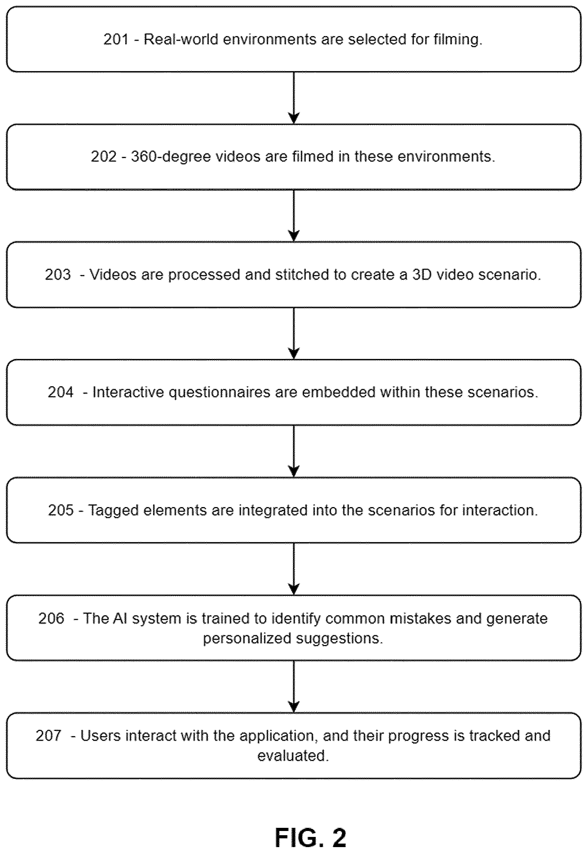

Referring now to FIG.2, an Application Implementation Flow Diagram for the inventive language learning application is provided. The following steps elaborate the process from the initial selection of real-world environments to the final deployment of the application for use. The individual steps are marked with reference numerals for clarity.

Step 1: Real-World Environment Selection (201) - The implementation of the application begins with the selection of real-world environments. These environments are chosen based on their potential to provide diverse, authentic, and contextually rich scenarios for language learning.

Step 2: Filming 360-Degree Videos (202) - Once the environments are selected, the next step involves filming 360-degree videos in these environments. These videos are designed to encapsulate real-life scenarios, offering an immersive experience for learners.

Step 3: Video Processing (203) - After filming, these videos are processed and stitched together to create 3D video scenarios. The processing ensures smooth transitions between different parts of the video, providing a seamless VR experience for the user.

Step 4: Embedding Interactive Questionnaires (204) - In this step, interactive questionnaires are embedded within these 3D video scenarios. These questionnaires, in the form of floating text boxes, prompt users to respond verbally to questions, providing an interactive language learning experience.

Step 5: Integrating Tagged Elements (205) - Tagged elements or objects are integrated within these scenarios for user interaction. This step involves the identification of elements in the videos that can be tagged for users to interact with, and the storage of vocabulary related to these tagged elements.

Step 6: Training the Al System (206) - The AI system is trained to identify common mistakes made by users and to generate personalized suggestions based on these mistakes. This involves the use of machine learning algorithms and natural language processing techniques to understand the users' learning patterns and needs.

Step 7: User Progress Tracking (207) - Users' interactions with the application are continuously tracked and evaluated. This data is used to provide feedback to users, update the AI system's understanding of the users' learning, and make improvements to the application.

### NETWORK COMPONENTS

A server as described herein can be any suitable type of computer. A computer may be a uniprocessor or multiprocessor machine. Accordingly, a computer may include one or more processors and, thus, the aforementioned computer system may also include one or more processors. Examples of processors include sequential state machines, microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), gated logic, programmable control boards (PCBs), and other suitable hardware configured to perform the various functionality described throughout this disclosure.

Additionally, the computer may include one or more memories. Accordingly, the aforementioned computer systems may include one or more memories. A memory may include a memory storage device or an addressable storage medium which may include, by way of example, random access memory (RAM), static random access memory (SRAM), dynamic random access memory (DRAM), electronically erasable programmable read-only memory (EEPROM), programmable read-only memory (PROM), erasable programmable read-only memory (EPROM), hard disks, floppy disks, laser disk players, digital video disks, compact disks, video tapes, audio tapes, magnetic recording tracks, magnetic tunnel junction (MTJ) memory, optical memory storage, quantum mechanical storage, electronic networks, and/or other devices or technologies used to store electronic content such as programs and data. In particular, the one or more memories may store computer executable instructions that, when executed by the one or more processors, cause the one or more processors to implement the procedures and techniques described herein. The one or more processors may be operably associated with the one or more memories so that the computer executable instructions can be provided to the one or more processors for execution. For example, the one or more processors may be operably associated to the one or more memories through one or more buses. Furthermore, the computer may possess or may be operably associated with input devices (e.g., a keyboard, a keypad, controller, a mouse, a microphone, a touch screen, a sensor) and output devices such as (e.g., a computer screen, printer, or a speaker).

The computer may advantageously be equipped with a network communication device such as a network interface card, a modem, or other network connection device suitable for connecting to one or more networks.

A computer may advantageously contain control logic, or program logic, or other substrate configuration representing data and instructions, which cause the computer to operate in a specific and predefined manner as, described herein. In particular, the computer programs, when executed, enable a control processor to perform and/or cause the performance of features of the present disclosure. The control logic may advantageously be implemented as one or more modules. The modules may advantageously be configured to reside on the computer memory and execute on the one or more processors. The modules include, but are not limited to, software or hardware components that perform certain tasks. Thus, a module may include, by way of example, components, such as, software components, processes, functions, subroutines, procedures, attributes, class components, task components, object-oriented software components, segments of program code, drivers, firmware, micro code, circuitry, data, and/or the like.

The control logic conventionally includes the manipulation of digital bits by the processor and the maintenance of these bits within memory storage devices resident in one or more of the memory storage devices. Such memory storage devices may impose a physical organization upon the collection of stored data bits, which are generally stored by specific electrical or magnetic storage cells.

The control logic generally performs a sequence of computer-executed steps. These steps generally require manipulations of physical quantities. Usually, although not necessarily, these quantities take the form of electrical, magnetic, or optical signals capable of being stored, transferred, combined, compared, or otherwise manipulated. It is conventional for those skilled in the art to refer to these signals as bits, values, elements, symbols, characters, text, terms, numbers, files, or the like. It should be kept in mind, however, that these and some other terms should be associated with appropriate physical quantities for computer operations, and that these terms are merely conventional labels applied to physical quantities that exist within and during operation of the computer based on designed relationships between these physical quantities and the symbolic values they represent.

It should be understood that manipulations within the computer are often referred to in terms of adding, comparing, moving, searching, or the like, which are often associated with manual operations performed by a human operator. It is to be understood that no involvement of the human operator may be necessary, or even desirable. The operations described herein are machine operations performed in conjunction with the human operator or user that interacts with the computer or computers.

It should also be understood that the programs, modules, processes, methods, and the like, described herein are but an exemplary implementation and are not related, or limited, to any particular computer, apparatus, or computer language. Rather, various types of general-purpose computing machines or devices may be used with programs constructed in accordance with some of the teachings described herein. In some embodiments, very specific computing machines, with specific functionality, may be required.

Unless otherwise defined, all terms (including technical terms) used herein have the same meaning as commonly understood by one having ordinary skill in the art to which this invention belongs. It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

The disclosed embodiments are illustrative, not restrictive. While specific configurations of the VR learning method and application have been described in a specific manner referring to the illustrated embodiments, it is understood that the present invention can be applied to a wide variety of solutions which fit within the scope and spirit of the claims. There are many alternative ways of implementing the invention.

It is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A method for language learning, the method comprising the steps of:
a) providing an immersive language learning application with virtual reality (VR) scenarios;
b) presenting an interactive questionnaire within each VR scenario that prompts a user to respond verbally to context-related questions;
c) utilizing voice recognition software to capture and analyze the user's responses in real-time;
d) enabling the user to interact with tagged objects within the VR scenario to learn related vocabulary;
e) integrating an artificial intelligence (Al) system to identify common mistakes made by the user and generate personalized suggestions based on these mistakes;
f) providing distinct user interfaces for administrators, teachers, and students, each with its associated functionalities.

2. The method of claim 1, wherein each VR scenario depicts a real-world environment recorded in a 360-degree video.

3. The method of claim 1, wherein the progression of the VR scenario is contingent on the user's responses to the interactive questionnaire.

4. The method of claim 1, wherein the AI system is trained using machine learning algorithms to identify common mistakes in the user's responses.

5. The method of claim 1, wherein the personalized suggestions generated by the AI system include video explanations and vocabulary revisions.

6. The method of claim 1, wherein the teacher interface allows tracking and evaluation of student progress.

7. An immersive language learning application comprising:
a) a plurality of VR scenarios recorded in real-world environments;
b) an interactive questionnaire embedded within each VR scenario;
c) a voice recognition software to capture and analyze user responses in real-time;
d) an AI system to identify common mistakes made by users and generate personalized suggestions based on these mistakes;
e) distinct user interfaces for administrators, teachers, and students, each with its associated functionalities.

8. The application of claim 7, wherein the VR scenarios are recorded in a 360-degree video.

9. The application of claim 7, wherein users can interact with tagged objects within the VR scenario to learn related vocabulary.

10. The application of claim 7, wherein the AI system is trained using machine learning algorithms to identify common mistakes in the user's responses.

11. The application of claim 7, wherein the personalized suggestions generated by the AI system include video explanations and vocabulary revisions.

12. The application of claim 7, wherein the teacher interface allows tracking and evaluation of student progress.

13. A non-transitory computer-readable medium containing program instructions, wherein execution of the program instructions by one or more processors of a computer causes the computer to carry out the steps of the method as defined in claim 1.

14. The method of claim 1, further comprising the step of applying the method to subject areas beyond language learning, including computer science, math, and geography.

15. The application of claim 7, further comprising the feature to extend the application to subject areas beyond language learning, including computer science, math, and geography.
